# EUROPÄISCHE PATENTSCHRIFT

(11) **EP 2 376 872 B1**
(45) Veröffentlichungstag und Bekanntmachung des Hinweises auf die Patenterteilung: **12.09.2012**
(21) Anmeldenummer: 09741247.2
(22) Anmeldetag: 29.10.2009
(51) Int. Cl.: G01D 5/22, H02K 24/00, H02K 15/00

(54) **RESOLVERBAUTEIL UND DAMIT AUSGESTATTETER RESOLVER**
RESOLVER COMPONENT, AND RESOLVER EQUIPPED THEREWITH
COMPOSANT DE RÉSOLVEUR ET RÉSOLVEUR ÉQUIPÉ DE CELUI-CI

(30) Priorität: 11.12.2008 DE 102008061779
(43) Veröffentlichungstag der Anmeldung: 19.10.2011
(73) Patentinhaber: LTN Servotechnik GmbH, 83624 Otterfing (DE)
(72) Erfinder: ANGERPOINTER, Ludwig, 81247 München (DE)
(74) Vertreter: Hofmann, Ernst
(86) Internationale Anmeldenummer: PCT/EP2009/007747
(87) Internationale Veröffentlichungsnummer: WO 2010/066317

(56) Entgegenhaltungen:
- EP-A1- 1 385 256
- EP-A1- 1 404 007
- EP-A2- 1 351 369
- US-A1- 2003 137 295

## Beschreibung

Die Erfindung betrifft ein Resolverbauteil gemäß dem Anspruch 1, sowie einen Resolver, der mit diesem Resolverbauteil ausgestattet ist gemäß dem Anspruch 12 und welcher zur Bestimmung der relativen Winkellage zwischen zwei Maschinenteilen geeignet ist.

Als Resolver bezeichnet man in der Elektrotechnik einen elektromagnetischen Messumformer zur Wandlung der Winkellage eines Rotors in eine elektrische Größe, bzw. in elektrische Signale. In der vorliegenden Anmeldung umfasst der Begriff Resolver auch Messumformer, die mit Synchro oder Drehmelder bezeichnet werden oder auch so genannte RVDT (rotary variable differential transformer).

Resolver werden häufig in industriellen Umgebungen zur Messung der relativen Winkelstellung von zueinander drehbaren Teilen verwendet. Als zueinander drehbare Teile kommen oft eine drehende Welle und ein feststehendes Gehäuse in Betracht. Derartige Resolver umfassen sowohl stator- als auch rotorseitige Wicklungen vorzugsweise aus Draht, die meist an Blechpaketen angeordnet sind. In die rotorseitigen Wicklungen können beispielsweise über eine induktive Ankopplung Erregerströme eingeleitet werden. In diesem Fall können dann an den statorseitigen Wicklungen Spannungen abgegriffen werden, die sich mit der Drehung des Rotors in der Regel sinusförmig verändern.

Unter anderem weil derartige Resolver in großen Stückzahlen hergestellt werden, ist es von Bedeutung, dass entsprechende Resolverbauteile wirtschaftlich fertigbar und dennoch robust sind.

In der Offenlegungsschrift EP 0 917 273 wird die Verwendung von Pins bzw. Anschlussstiften bei Resolvern im Zusammenhang mit der Kontaktierung von Wickeldrähten gezeigt.

Der Erfindung liegt die Aufgabe zugrunde, ein Resolverbauteil bzw. einen damit ausgestatteten Resolver zur zuverlässigen und sicheren Bestimmung von relativen Winkellagen zu schaffen, wobei das Resolverbauteil und der damit ausgestattete Resolver mit vergleichsweise geringem Aufwand herstellbar sind.

Diese Aufgabe wird erfindungsgemäß durch die Merkmale des Anspruchs 1 bzw. durch die Merkmale Anspruchs 12 gelöst.

Entsprechend umfasst das erfindungsgemäße Resolverbauteil ein erstes Element, welches Wicklungen aufweist und eine erste Gruppe von Anschlussstiften sowie eine zweite Gruppe von zumindest einem Paar von Anschlussstiften. Diese Anschlussstifte der zweiten Gruppe stehen paarweise miteinander in elektrischem Kontakt. Weiterhin sind die Wicklungen elektrisch mit zumindest einer Teilanzahl der Anschlussstifte der ersten Gruppe kontaktiert, z. B. verlötet. Zudem umfasst das Resolverbauteil ein zweites Element, welches eine weitere Wicklung sowie zumindest einen zusätzlichen Anschlussstift, aufweist. Die weitere Wicklung ist elektrisch mit diesem Anschlussstift des zweiten Elements kontaktiert, insbesondere verlötet. Schließlich umfasst das Resolverbauteil auch noch zumindest eine elektrische Leitung, die mit einem Anschlussstift des Paares der zweiten Gruppe kontaktiert, z. B. verlötet, ist. Der andere Anschlussstift dieses Paares der zweiten Gruppe ist zudem mit einem Anschlussstift des zweiten Elements elektrisch verbunden, zur Übertragung von elektrischer Spannung zwischen der Leitung und der weiteren Wicklung.

In vorteilhafter Weise ist der andere Anschlussstift des Paares des ersten Elements mit dem Anschlussstift des zweiten Elements verlötet, so dass auf diese Weise eine elektrische und mechanische Verbindung geschaffen ist.

In weiterer Ausgestaltung der Erfindung umfasst das zweite Element ein Transformatorbauteil. Dabei kann die weitere Wicklung als Transformatorwicklung ausgestaltet sein, deren Enden jeweils mit dem Anschlussstift des Transformatorbauteils kontaktiert sind.

Mit Vorteil ist das Resolverbauteil so ausgestaltet, dass die elektrische Leitung, welche mit den Anschlussstiften der zweiten Gruppe in elektrischem Kontakt steht, zur Spannungsversorgung des zweiten Elements dient, bzw. zur Spannungsversorgung des zweiten Elements geeignet ist.

In vorteilhafter Bauart ist in Umfangsrichtung zwischen von Anschlussstiften der ersten Gruppe zumindest ein Anschlussstift der zweite Gruppe angeordnet. Insbesondere können die erste Gruppe und die zweite Gruppe von Anschlussstiften so angeordnet sein, dass diese geometrisch betrachtet in Umfangsrichtung jeweils abwechselnd innerhalb zweier Ringstücke angeordnet sind. Dabei liegen die geometrischen Ringstücke der ersten Gruppe in Umfangsrichtung zwischen zwei geometrischen Ringstücken der zweiten Gruppe und die Ringstücke der zweiten Gruppe in Umfangsrichtung zwischen zwei Ringstücken der ersten Gruppe.

In weiterer Ausgestaltung der Erfindung kann das Paar von Anschlussstiften der zweiten Gruppe durch einen Draht miteinander in elektrischem Kontakt stehen. Dabei kann der Draht, bzw. dessen Enden, mit Vorteil an je einem Anschlussstift des betreffenden Paares kontaktiert, bzw. verlötet sein.

Vorteilhaft ist zudem eine Bauweise, bei welcher der Draht zur Verbindung von Anschlussstiften innerhalb eines Paares am ersten Element mit einer tangentialen Richtungskomponente, insbesondere radial außerhalb der Anschlussstifte, verläuft. Mit Vorteil kann in diesem Zusammenhang der Bereich des Drahtes, welcher mit einer tangentialen Richtungskomponente verläuft, mit axialem Versatz bezüglich der Kontaktstellen des Drahtes an den Anschlussstiften der zweiten Gruppe angeordnet sein.

Weiterhin kann vorteilhaft das Resolverbauteil so ausgestaltet sein, dass die zweite Gruppe zumindest zwei Paare von Anschlussstiften aufweist, welche paarweise miteinander in elektrischem Kontakt stehen. Das zweite Element kann dann eine dritte Gruppe mit zumindest zwei Anschlussstiften aufweisen, wobei die weitere Wicklung elektrisch mit den Anschlussstiften der dritten Gruppe kontaktiert ist. Das Resolverbauteil umfasst zumindest zwei elektrische Leitungen, die jeweils mit einem Anschlussstift der Paare der zweiten Gruppe kontaktiert sind. Die anderen Anschlussstifte der Paare sind jeweils mit einem Anschlussstift der dritten Gruppe elektrisch verbunden. Mit Vorteil umfasst das Resolverbauteil weitere Leitungen, welche mit Anschlussstiften der ersten Gruppe kontaktiert sind, wobei über diese weiteren Leitungen Signale übertragbar sein können.

Weiterhin umfasst die Erfindung einen Resolver, welcher einen Rotor und einen Stator umfasst, wobei der Rotor relativ zum Stator um eine Achse drehbar angeordnet ist. Der Resolver umfasst ein Resolverbauteil gemäß einer der oben erläuterten Ausführungen, wobei das Resolverbauteil dem Stator zuordenbar, bzw. am Stator drehfest befestigt ist.

Der Resolver ist mit Vorteil als bürstenloser Resolver ausgestaltet, wobei die oben charakterisierte weitere Wicklung und eine dritte Wicklung eine Transformatoreinheit bilden.

Durch die Erfindung ist es nunmehr möglich die Anzahl von Verbindungen zwischen den Enden der Leitungen und den dünnen Drähten im Resolver auf ein Minimum zu reduzieren. Im Idealfall können derartige Verbindungen vollständig vermieden werden, wenn also sämtliche Leitungen an Anschlussstiften kontaktiert werden. Durch diese Reduzierung der vergleichsweise anfälligeren Verbindungen zwischen Leitungen und den Drähten kann die Robustheit bzw. Fertigbarkeit des Resolvers verbessert werden.

Vorteilhafte Ausbildungen der Erfindung entnimmt man den abhängigen Ansprüchen.

Weitere Einzelheiten und Vorteile des erfindungsgemäßen Resolverbauteils ergeben sich aus der nachfolgenden Beschreibung eines Ausführungsbeispiels anhand der beiliegenden Figuren.

Es zeigen die
- Figur 1: eine Draufsicht auf ein erstes Element des Resolverbauteils,
- Figur 2: eine perspektivische Ansicht eines zweiten Elements des Resolverbauteils,
- Figur 3: eine Teilschnittdarstellung C - C durch das Resolverbauteil,
- Figur 4: eine Teilschnittdarstellung einen Resolver.

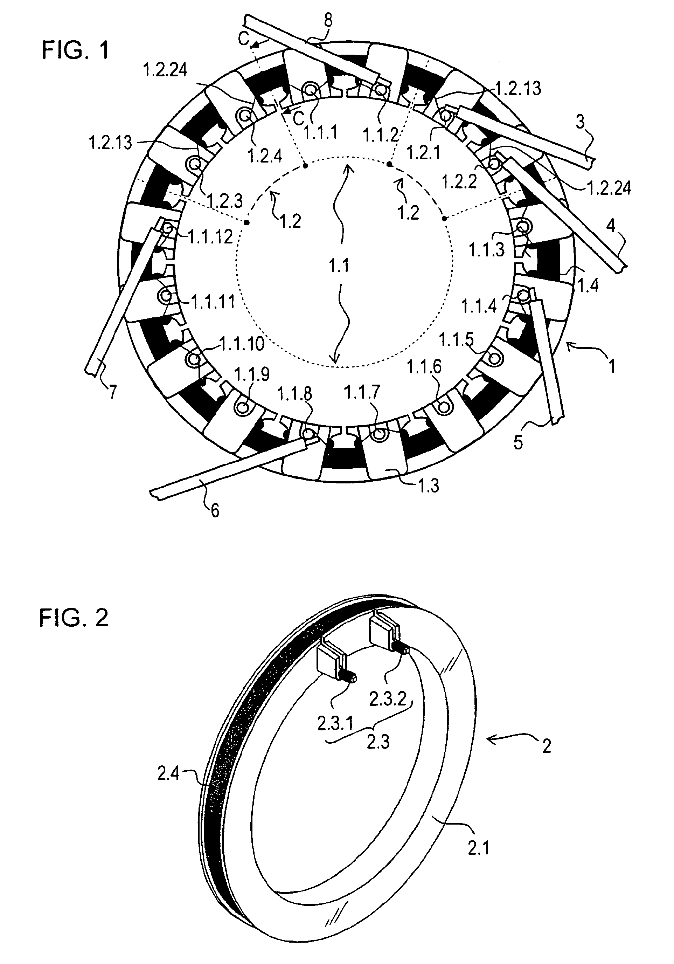

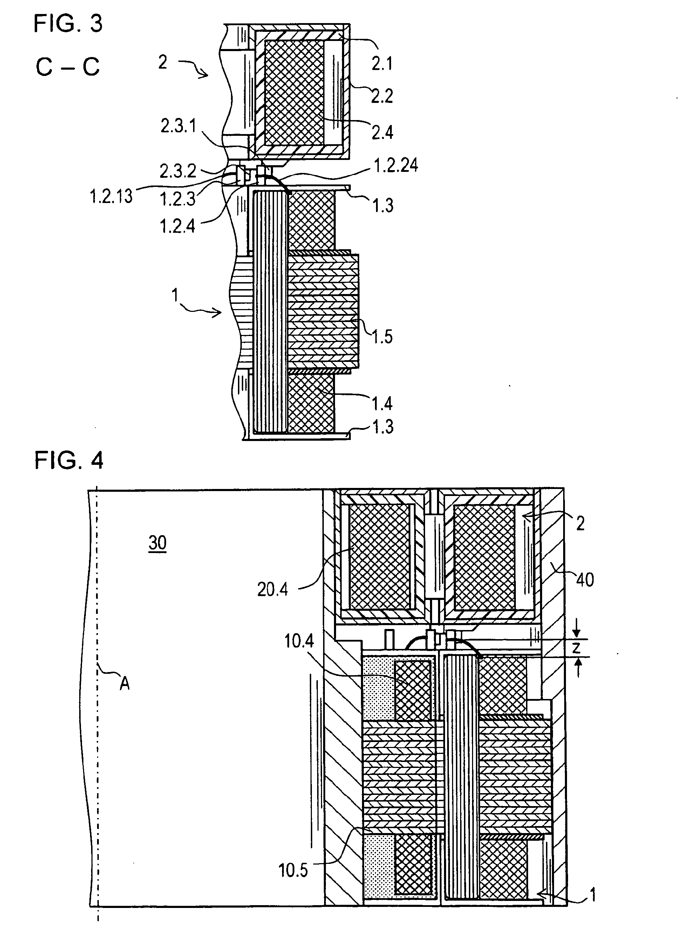

In der Figur 1 ist ein erstes Element des Resolverbauteils, hier als Empfängereinheit 1 bezeichnet, gezeigt. Die Empfängereinheit 1 umfasst zwei Wicklungen 1.4. Die Wicklungen 1.4 sind aus mit Isolierlack beschichteten Drähten gebildet und an zwei Endkappen 1.3 (siehe auch die Figur 3) so angeordnet, dass diese um 90° phasenversetzte Signale empfangen können. Die Wicklungen 1.4 verlaufen gemäß der Ansicht C - C in der Figur 3 teilweise in axialer Richtung. Durch die Lage der Schnittebene sind die axial verlaufenden Drähte nicht im Schnitt dargestellt im Gegensatz zu den im Wesentlichen tangential bzw. in Umfangsrichtung orientierten Drähten des Wickelkopfs.

Weiterhin umfasst die Empfängereinheit 1 zwei Gruppen 1.1, 1.2 von Anschlussstiften 1.1.1 bis 1.1.12, 1.2.1 bis 1.2.4, welche in einer der Endkappen 1.3 eingesteckt sind und aus dieser senkrecht bezogen auf die Zeichenebene der Figur 1 herausragen. Die betreffende Endkappe 1.3 ist aus isolierendem Material, hier aus Kunststoff hergestellt, so dass die Anschlussstifte 1.1.1 bis 1.1.12 der ersten Gruppe 1.1 und die Anschlussstifte 1.2.1 bis 1.2.4 der zweiten Gruppe 1.2 zunächst elektrisch von sämtlichen anderen Teilen isoliert sind.

Die Anschlussstifte 1.1.1 bis 1.1.12 der ersten Gruppe 1.1 wie auch die Anschlussstifte 1.2.1 bis 1.2.4 der zweiten Gruppe 1.2 sind geometrisch betrachtet innerhalb von unterschiedlichen Ringstücken angeordnet. Die Innenberandungen der unterschiedlichen Ringstücke sind in der Figur 1 mit unterschiedlich gestrichelten Linien dargestellt. Entsprechend sind also die Ringstücke der ersten Gruppe 1.1 so angeordnet, dass diese in Umfangsrichtung zwischen zwei Ringstücken der zweiten Gruppe 1.2 und jedes Ringstück der zweiten Gruppe 1.2 in Umfangsrichtung zwischen zwei Ringstücken der ersten Gruppe 1.1 zu liegen kommen. Diese Betrachtung bezüglich der unterschiedlichen Ringstücke ist hier rein geometrischer Art und drückt sich beispielsweise nicht durch eine Mehrstückigkeit der Endkappe 1.3 aus.

Die Anschlussstifte 1.1.1 bis 1.1.12, 1.2.1 bis 1.2.4 der ersten und zweiten Gruppe 1.1, 1.2 unterscheiden sich im Übrigen nicht durch konstruktive Merkmale, vielmehr weisen die Anschlussstifte 1.1.1 bis 1.1.12, 1.2.1 bis 1.2.4 der jeweiligen Gruppen 1.1, 1.2 unterschiedliche Funktionen auf.

Verschiedene Anschlussstifte 1.1.1 bis 1.1.12 der ersten Gruppe 1.1 sind mit Drähten der Wicklungen 1.4 verbunden, hier verlötet. Beispielsweise wird in diesem Kontext eine Teilanzahl der Anschlussstifte 1.1.2, 1.1.4, 1.1.8, 1.1.12 der ersten Gruppe 1.1 gleichzeitig zur Kontaktierung mit elektrischen Leitungen 8, 5, 6, 7 zur Signalübertragung verwendet. Andere Anschlussstifte 1.1.1, 1.1.3, 1.1.7, 1.1.10, 1.1.11 hingegen dienen nur zur Verbindung von Drahtenden innerhalb einer Wicklung 1.4, um trotz des geometrisch vergleichsweise komplexen Wickelschemas symmetrische Verhältnisse schaffen zu können, so dass im späteren Betrieb eines entsprechenden Resolvers die beiden empfangenen Signale nahezu amplitudengleich sind.

Die Anschlussstifte 1.2.1 bis 1.2.4 der zweiten Gruppe 1.2 können in zwei Paare eingeteilt werden, die verbunden durch Drähte 1.2.13, 1.2.24, in elektrischem Kontakt zueinander stehen. So sind die Anschlussstifte 1.2.1 und 1.2.3 durch den Draht 1.2.13 miteinander verbunden, während die Anschlussstifte 1.2.2 und 1.2.4 durch den Draht 1.2.24 elektrisch in Kontakt stehen. Diejenigen Stellen, z. B. Lötstellen, an denen die Drähte 1.2.13, 1.2.24 am jeweiligen Anschlussstift 1.2.3, 1.2.4 kontaktiert sind werden im Folgenden als Kontaktstellen bezeichnet.

Die Drähte 1.2.13, 1.2.24, welche die elektrische Verbindung zwischen den Anschlussstiften 1.2.1, 1.2.3 bzw. zwischen den Anschlussstiften 1.2.2, 1.2.4 herstellen, werden an einer der Endkappen 1.3 weitgehend parallel zu den Köpfen der Wicklungen 1.4 in Umfangsrichtung geführt. Diese Drähte 1.2.13, 1.2.24 verlaufen daher mit einer tangentialen Richtungskomponente. Zwischen den Kontaktstellen an den Anschlussstiften 1.2.1. 1.2.3 der zweiten Gruppe 1.2 und dem Bereich, in welchem die Drähte 1.2.13, 1.2.24 mit einer tangentialen Richtungskomponente verlaufen, liegt ein Abschnitt in dem die Drähte 1.2.13, 1.2.24 in axialer Richtung verlaufen. Folglich ist der Bereich des Drahtes 1.2.24; 1.2.13, welcher mit einer tangentialen Richtungskomponente verläuft, mit axialem Versatz z bezüglich der Kontaktstellen der Drähte 1.2.24, 1.2.13 an den Anschlussstiften 1.2.3, 1.2.4 der zweiten Gruppe 1.2 angeordnet. Die Drähte 1.2.13, 1.2.24, welche die elektrische Verbindung zwischen den Anschlussstiften 1.2.1, 1.2.3 bzw. den Anschlussstiften 1.2.2, 1.2.4 herstellen, sind im Übrigen nur durch den Isolierlack von den Drähten der Wicklungen 1.4 elektrisch getrennt.

Weiterhin umfasst das Resolverbauteil ein zweites Element, welches im Folgenden als Transformatorbauteil 2 bezeichnet wird. Das Transformatorbauteil 2 umfasst gemäß der Figur 2 einen Trägerring 2.1, an dem eine weitere Wicklung, hier als Transformatorwicklung 2.4 bezeichnet, angeordnet ist. Die Transformatorwicklung 2.4 ist im vorgestellten Ausführungsbeispiel aus Drähten gebildet. Die Enden der Drähte sind mit weiteren Anschlussstiften 2.3.1, 2.3.2, die einer dritten Gruppe 2.3 zuordenbar sind, mechanisch und elektrisch verbunden. Die Transformatorwicklung 2.4 mit ihrem Trägerring 2.1, der hier aus Kunststoff besteht, wird in ein ringförmiges Gehäuse 2.2, das im gezeigten Ausführungsbeispiel aus Metall besteht, eingebaut (Figur 3).

Im Zuge der Montage des Resolverbauteils werden zunächst die elektrischen Leitungen 3 bis 8 mit den betreffenden Anschlussstiften 1.2.1, 1.2.2, 1.1.4, 1.1.8, 1.1.12, 1.1.4, 1.1.2 kontaktiert, beispielsweise verlötet. Eine elektrische Verbindung zwischen einer der Leitungen 3 bis 8 und einem der überaus dünnen Drähte der Wicklungen 1.4 oder der Transformatorwicklung 2.4 kann somit vollständig vermieden werden. Danach wird mit axialem Versatz die Empfängereinheit 1 mit den Leitungen 3 bis 8 an das Transformatorbauteil 2 herangeführt und zwar in einer Weise, dass die Anschlussstifte 1.2.3, 1.2.4 der Empfängereinheit 1 in die Nähe der Anschlussstifte 2.3.1, 2.3.2 des Transformatorbauteils 2 gelangen. In dieser Stellung werden die Anschlussstifte 1.2.3, 2.3.1 und die Anschlussstifte 1.2.4, 2.3.2 paarweise miteinander kontaktiert, beispielsweise verlötet, so dass eine elektrische und mechanische Verbindung zwischen den Anschlussstiften 1.2.3, 2.3.1 und den Anschlussstiften 1.2.4, 2.3.2 entsteht. In diesem Zusammenhang ist es vorteilhaft, wenn sich die miteinander kontaktierten Anschlussstifte 1.2.3, 2.3.1 und die Anschlussstifte 1.2.4, 2.3.2 in Axialrichtung überlappen. Anschließend wird, wie aus der der Figur 4 - einem Teilschnitt durch einen Resolver - zu entnehmen ist, das Resolverbauteil in ein Gehäuse 40 eingesetzt. Im vorgestellten Ausführungsbeispiel ist das Gehäuse 40 als Stator des Resolvers vorgesehen, wobei die Leitungen 3 bis 8 durch eine Öffnung im Gehäuse 40 im Bereich des Zwischenraumes zwischen der Empfängereinheit 1 und dem Transformatorbauteil 2 eingeführt werden. Die Bohrung ist in den Figuren nicht sichtbar. Weiterhin umfasst der Resolver neben dem beschriebenen Resolverbauteil eine Hohlwelle 30 an der radial gegenüberliegend zur Transformatorwicklung 2.4 eine dritte Wicklung, hier eine rotorseitige, Transformatorwicklung 20.4, angeordnet ist. Radial gegenüberliegend bezüglich der Wicklungen 1.4 sind Modulationswicklungen 10.4 rotorseitig angeordnet.

Somit umfasst also der Resolver einen Rotor und einen Stator mit dem oben beschriebenen Resolverbauteil, wobei der Rotor relativ zum Stator um eine Achse A drehbar angeordnet ist. Durch einen entsprechenden Resolver kann die relative Winkellage um die Achse A zwischen der Hohlwelle 30 und dem Gehäuse 40 bestimmt werden. Zu diesem Zweck wird durch die Leitungen 3, 4 eine sinusförmige Wechselspannung angelegt. Diese Wechselspannung wird über die Anschlussstifte 1.2.1, 1.2.2 und die Drähte 1.2.13, 1.2.24 an die Anschlussstifte 1.2.3, 1.2.4 übertragen. Da die Anschlussstifte 1.2.3, 1.2.4 elektrisch mit den Anschlussstiften 2.3.2, 2.3.1 der Transformatorwicklung 2.4 verbunden sind, kann über diesen Weg die Transformatorwicklung 2.4 elektrisch versorgt werden. Dies hat zur Folge, dass in die Transformatorwicklungen 20.4 des Rotors eine Wechselspannung mit einem vorgegebenen Transformationsverhältnis induziert wird. Diese Wechselspannung wird damit auch an die Modulationswicklungen 10.4 des Rotors angelegt, so dass in den Wicklungen 1.4 der Empfängereinheit 1, welche die Modulationswicklungen 10.4 des Rotors umschließen, entsprechende Ausgangsspannungen induziert werden. Bei der Verwendung von zwei um 90° versetzten Wicklungen 1.4 können dann zwei um 90° phasenversetzte Spannungssignale abgegriffen werden, die von der relativen Winkellage zwischen Stator und Rotor abhängen. Der vorliegende Resolver ist demnach als ein bürsten- oder schleifringloser Resolver ausgestaltet. Die elektrischen Leitungen 3, 4, welche mit den Anschlussstiften 1.21, 1.22 der zweiten Gruppe 1.2 in elektrischem Kontakt stehen, dienen also zur Spannungsversorgung des gesamten Resolvers.

## Patentansprüche

1. Resolverbauteil, umfassend
- ein erstes Element (1), welches
• Wicklungen (1.4),
• eine erste Gruppe (1.1) von Anschlussstiften (1.1.1 bis 1.1.12) und
• eine zweite Gruppe (1.2) von zumindest einem Paar von Anschlussstiften (1.2.1, 1.2.3; 1.2.2, 1.2.4), welche miteinander in elektrischem Kontakt stehen,
aufweist, wobei
die Wicklungen (1.4) elektrisch mit Anschlussstiften (1.1.1 bis 1.1.12) der ersten Gruppe (1.1) kontaktiert sind, sowie
- ein zweites Element (2), welches
. eine weitere Wicklung (2.4) sowie
. zumindest einen Anschlussstift (2.3.1, 2.3.2)
aufweist, wobei
die weitere Wicklung (2.4) elektrisch mit dem Anschlussstift (2.3.1, 2.32) des zweiten Elements (2) kontaktiert ist, und
- zumindest eine elektrische Leitung (3, 4),
wobei die Leitung (3, 4) mit einem Anschlussstift (1.2.1, 1.2.2) des Paares der zweiten Gruppe (1.2) kontaktiert ist und der andere Anschlussstift (1.2.3, 1.2.4) dieses Paares mit einem Anschlussstift (2.3.1, 2.3.2) des zweiten Elements (2) elektrisch verbunden ist, zur Übertragung von elektrischer Spannung zwischen der Leitung (3, 4) und der weiteren Wicklung (2.4).

2. Resolverbauteil gemäß dem Anspruch 1, wobei der andere Anschlussstift (1.2.3, 1.2.4) dieses Paares des ersten Elements (1) mit dem Anschlussstift (2.3.1, 2.3.2) des zweiten Elements (2) verlötet ist.

3. Resolverbauteil gemäß dem Anspruch 1 oder 2, wobei das zweite Element (2) ein Transformatorbauteil umfasst.

4. Resolverbauteil gemäß einem der vorhergehenden Ansprüche, wobei die elektrische Leitung (3, 4), welche mit den Anschlussstiften (1.2.1, 1.2.2) der zweiten Gruppe (1.2) in elektrischem Kontakt steht zur Spannungsversorgung des zweiten Elements (2) dient.

5. Resolverbauteil gemäß einem der vorhergehenden Ansprüche, wobei in Umfangsrichtung zwischen von Anschlussstiften (1.1.1 bis 1.1.12) der ersten Gruppe (1.1) zumindest ein Anschlussstift (1.2.1, 1.2.3; 1.2.2, 1.2.4) der zweite Gruppe (1.2) angeordnet ist.

6. Resolverbauteil gemäß einem der vorhergehenden Ansprüche, wobei das Paar von Anschlussstiften (1.2.1, 1.2.3; 1.2.2, 1.2.4) der zweiten Gruppe (1.2), durch einen Draht (1.2.24; 1.2.13) miteinander in elektrischem Kontakt stehen.

7. Resolverbauteil gemäß dem Anspruch 6, wobei der Draht (1.2.24; 1.2.13) am ersten Element (1) mit einer tangentialen Richtungskomponente verläuft.

8. Resolverbauteil gemäß dem Anspruch 7, wobei der Bereich des Drahtes (1.2.24; 1.2.13), welcher mit einer tangentialen Richtungskomponente verläuft, mit axialem Versatz (z) bezüglich der Kontaktstellen des Drahtes (1.2.24; 1.2.13) an den Anschlussstiften (1.2.1, 1.2.3; 1.2.2, 1.2.4) der zweiten Gruppe (1.2) angeordnet ist.

9. Resolverbauteil, gemäß einem der vorhergehenden Ansprüche, wobei die zweite Gruppe (1.2) zumindest zwei Paare von Anschlussstiften (1.2.1, 1.2.3; 1.2.2, 1.2.4) aufweist, welche paarweise miteinander in elektrischem Kontakt stehen, und das zweite Element (2) eine dritte Gruppe (2.3) mit zumindest zwei Anschlussstiften (2.3.1. 2.3.2) aufweist, wobei die weitere Wicklung (2.4) elektrisch mit den Anschlussstiften (2.3.1. 2.3.2) der dritten Gruppe (2.3) kontaktiert ist und das Resolverbauteil zumindest zwei elektrische Leitungen (3, 4) umfasst, wobei die Leitungen (3, 4) jeweils mit einem Anschlussstift (1.2.1, 1.2.2) der Paare der zweiten Gruppe (1.2) kontaktiert sind und die anderen Anschlussstifte (1.2.3, 1.2.4) der Paare jeweils mit einem Anschlussstift (2.3.1, 2.3.2) der dritten Gruppe (2.3) elektrisch verbunden sind.

10. Resolverbauteil gemäß einem der vorhergehenden Ansprüche, wobei das Resolverbauteil weitere Leitungen (5 bis 8) umfasst, welche mit Anschlussstiften (1.1.1 bis 1.1.12) der ersten Gruppe (1.1) kontaktiert sind.

11. Resolverbauteil gemäß dem Anspruch 10, wobei über die weiteren Leitungen (5 bis 8) Signale übertragbar sind.

12. Resolver, welcher einen Rotor und einen Stator umfasst, wobei der Rotor relativ zum Stator um eine Achse A drehbar angeordnet ist, mit einem Resolverbauteil gemäß einem der vorhergehenden Ansprüche, wobei das Resolverbauteil dem Stator zuordenbar ist.

13. Resolver gemäß dem Anspruch 12, wobei die weitere Wicklung (2.4) und eine dritte Wicklung (20.4) eine Transformatoreinheit bilden.

14. Resolver gemäß einem der vorhergehenden Ansprüche, wobei die elektrische Leitung (3, 4), welche mit den Anschlussstiften (1.2.1, 1.2.2) der zweiten Gruppe (1.2) in elektrischem Kontakt steht zur Spannungsversorgung des Resolvers dient.

## Claims

1. Resolver component, comprising
- a first element (1), which has
• windings (1.4),
• a first group (1.1) of connecting pins (1.1.1 to 1.1.12) and
• a second group (1.2) of at least one pair of connecting pins (1.2.1, 1.2.3; 1.2.2, 1.2.4) which are in electrical contact with one another,
wherein
electrical contact is made with the windings (1.4) using connecting pins (1.1.1 to 1.1.12) of the first group (1.1), and
- a second element (2), which has
• a further winding (2.4) and
• at least one connecting pin (2.3.1, 2.3.2), wherein
electrical contact is made with the further winding (2.4) using the connecting pin (2.3.1, 2.3.2) of the second element (2), and
- at least one electrical line (3, 4),
wherein contact is made with the line (3, 4) using a connecting pin (1.2.1, 1.2.2) of the pair of the second group (1.2), and the other connecting pin (1.2.3, 1.2.4) of this pair is electrically connected to a connecting pin (2.3.1, 2.3.2) of the second element (2), for transmitting electrical voltage between the line (3, 4) and the further winding (2.4).

2. Resolver component according to Claim 1, wherein the other connecting pin (1.2.3, 1.2.4) of this pair of the first element (1) is soldered to the connecting pin (2.3.1, 2.3.2) of the second element (2).

3. Resolver component according to Claim 1 or 2, wherein the second element (2) comprises a transformer component.

4. Resolver component according to one of the preceding claims, wherein the electrical line (3, 4), which is in electrical contact with the connecting pins (1.2.1, 1.2.2) of the second group (1.2), is used for supplying voltage to the second element (2).

5. Resolver component according to one of the preceding claims, wherein at least one connecting pin (1.2.1, 1.2.3; 1.2.2, 1.2.4) of the second group (1.2) is arranged in the circumferential direction between connecting pins (1.1.1 to 1.1.12) of the first group (1.1).

6. Resolver component according to one of the preceding claims, wherein the pair of connecting pins (1.2.1, 1.2.3; 1.2.2, 1.2.4) of the second group (1.2) are in electrical contact with one another by means of a wire (1.2.24; 1.2.13).

7. Resolver component according to Claim 6, wherein the wire (1.2.24; 1.2.13) runs with a tangential directional component on the first element (1).

8. Resolver component according to Claim 7, wherein the region of the wire (1.2.24; 1.2.13) which runs with a tangential directional component is arranged with an axial offset (z) with respect to the contact points of the wire (1.2.24; 1.2.13) on the connecting pins (1.2.1, 1.2.3; 1.2.2, 1.2.4) of the second group (1.2).

9. Resolver component according to one of the preceding claims, wherein the second group (1.2) has at least two pairs of connecting pins (1.2.1, 1.2.3; 1.2.2, 1.2.4), which are in electrical contact with one another, in pairs, and the second element (2) has a third group (2.3) with at least two connecting pins (2.3.1, 2.3.2), wherein electrical contact is made with the further winding (2.4) using the connecting pins (2.3.1, 2.3.2) of the third group (2.3), and the resolver component comprises at least two electrical lines (3, 4), wherein contact is made with each of the lines (3, 4) using a connecting pin (1.2.1, 1.2.2) of the pairs of the second group (1.2), and the other connecting pins (1.2.3, 1.2.4) of the pairs are each electrically connected to a connecting pin (2.3.1, 2.3.2) of the third group (2.3).

10. Resolver component according to one of the preceding claims, wherein the resolver component comprises further lines (5 to 8), with which contact is made using connecting pins (1.1.1 to 1.1.12) of the first group (1.1).

11. Resolver component according to Claim 10, wherein signals are transmittable via the further lines (5 to 8).

12. Resolver, which comprises a rotor and a stator, wherein the rotor is arranged rotatably relative to the stator about an axis A, with a resolver component according to one of the preceding claims, wherein the resolver component is assignable to the stator.

13. Resolver according to Claim 12, wherein the further winding (2.4) and a third winding (20.4) form a transformer unit.

14. Resolver according to one of the preceding claims, wherein the electrical line (3, 4), which is in electrical contact with the connecting pins (1.2.1, 1.2.2) of the second group (1.2), is used for supplying voltage to the resolver.

## Revendications

1. Composant de résolveur, comprenant :
- un premier élément (1) comprenant des enroulements (1.4), un premier groupe (1.1) de tiges de jonction (1.1.1 à 1.1.12) et un deuxième groupe (1.2) d'au moins une paire de tiges de jonction (1.2.1, 1.2.3 ; 1.2.2, 1.2.4) en contact électrique les unes avec les autres, les enroulements (1.4) étant mis en contact sur le plan électrique avec les tiges de jonction (1.1.1 à 1.1.12) du premier groupe (1.1) ; ainsi que
- un deuxième élément (2) comprenant un enroulement supplémentaire (2.4) ainsi qu'au moins une tige de jonction (2.3.1, 2.3.2), l'enroulement supplémentaire (2.4) étant mis en contact sur le plan électrique avec la tige de jonction (2.3.1, 2.3.2) du deuxième élément (2) ; et
- au moins un câble électrique (3, 4), le câble (3, 4) étant mis en contact avec une tige de jonction (1.2.1, 1.2.2) de la paire du deuxième groupe (1.2) et l'autre tige de jonction (1.2.3, 1.2.4) de cette paire étant reliée sur le plan électrique à une tige de jonction (2.3.1, 2.3.2) du deuxième élément (2) afin de transmettre la tension électrique entre le câble (3, 4) et l'enroulement supplémentaire (2.4).

2. Composant de résolveur selon la revendication 1, l'autre tige de jonction (1.2.3, 1.2.4) de cette paire du premier élément (1) étant soudée par brasage à la tige de jonction (2.3.1, 2.3.2) du deuxième élément (2).

3. Composant de résolveur selon la revendication 1 ou 2, le deuxième élément (2) comprenant un composant de transformateur.

4. Composant de résolveur selon l'une quelconque des revendications précédentes, le câble électrique (3, 4) en contact électrique avec les tiges de jonction (1.2.1, 1.2.2) du deuxième groupe (1.2) servant à l'alimentation en tension du deuxième élément (2).

5. Composant de résolveur selon l'une quelconque des revendications précédentes, l'au moins une tige de jonction (1.2.1, 1.2.3 ; 1.2.2, 1.2.4) du deuxième groupe (1.2) étant disposée entre les tiges de jonction (1.1.1 à 1.1.12) du premier groupe (1.1) dans la direction circonférentielle.

6. Composant de résolveur selon l'une quelconque des revendications précédentes, la paire de tiges de jonction (1.2.1, 1.2.3 ; 1.2.2, 1.2.4) du deuxième groupe (1.2) étant mise en contact électrique par le biais d'un fil (1.2.24 ; 1.2.13).

7. Composant de résolveur selon la revendication 6, le fil (1.2.24 ; 1.2.13) s'étendant au niveau du premier élément (1) avec une composante de direction tangentielle.

8. Composant de résolveur selon la revendication 7, la région du fil (1.2.24 ; 1.2.13) s'étendant avec une composante de direction tangentielle étant disposée avec un certain décalage axial (z) par rapport aux points de contact du fil (1.2.24 ; 1.2.13) au niveau des tiges de jonction (1.2.1, 1.2.3 ; 1.2.2, 1.2.4) du deuxième groupe (1.2).

9. Composant de résolveur selon l'une quelconque des revendications précédentes, le deuxième groupe (1.2) comprenant au moins deux paires de tiges de jonction (1.2.1, 1.2.3 ; 1.2.2, 1.2.4) placées en contact électrique par paire et le deuxième élément (2) comprenant un troisième groupe (2.3) pourvu d'au moins deux tiges de jonction (2.3.1, 2.3.2), l'enroulement supplémentaire (2.4) étant en contact sur le plan électrique avec les tiges de jonction (2.3.1, 2.3.2) du troisième groupe (2.3) et le composant de résolveur comprenant au moins deux câbles électriques (3, 4), les câbles (3, 4) étant respectivement mis en contact avec une tige de jonction (1.2.1, 1.2.2) des paires du deuxième groupe (1.2) et les autres tiges de jonction (1.2.3, 1.2.4) des paires étant respectivement reliées sur le plan électrique à une tige de jonction (2.3.1, 2.3.2) du troisième groupe (2.3).

10. Composant de résolveur selon l'une quelconque des revendications précédentes, le composant de résolveur comprenant des câbles supplémentaires (5 à 8) mis en contact avec les tiges de jonction (1.1.1 à 1.1.12) du premier groupe (1.1).

11. Composant de résolveur selon la revendication 10, des signaux pouvant être transmis par le biais des câbles supplémentaires (5 à 8).

12. Résolveur comprenant un rotor et un stator, le rotor étant disposé de façon à pouvoir pivoter autour d'un axe A par rapport au stator, avec un composant de résolveur selon l'une quelconque des revendications précédentes, le composant de résolveur pouvant être associé au stator.

13. Résolveur selon la revendication 12, l'enroulement supplémentaire (2.4) et un troisième enroulement (20.4) formant une unité de transformateur.

14. Résolveur selon l'une quelconque des revendications précédentes, le câble électrique (3, 4) mis en contact électrique avec les tiges de jonction (1.2.1, 1.2.2) du deuxième groupe (1.2) servant à l'alimentation en tension du résolveur.
